# EUROPEAN PATENT SPECIFICATION

(11) **EP 1 527 696 B1**
(45) Date of publication and mention of the grant of the patent: **28.02.2007**
(21) Application number: 04256527.5
(22) Date of filing: 22.10.2004
(51) Int. Cl.: A23G 3/00, A23L 1/20

(54) **Method of preparing soy-containing confectionary type products**
Verfahren zur Herstellung von Soja enthaltenden Süßwaren
Procédé pour la préparation des confiseries comprennant du soja

(30) Priority: 29.10.2003 US 696515
(43) Date of publication of application: 04.05.2005
(73) Proprietor: KRAFT FOODS HOLDINGS, INC., Northfield, Illinois 60093 (US)
(72) Inventor: Akashe, Ahmad, Mundelein Illinois 60060 (US); Pszybylski, Paul, Chicago Illinois 60622 (US)
(74) Representative: Smaggasgale, Gillian Helen

(56) References cited:
- WO-A-03/068000
- WO-A-03/082026
- DE-C- 4 122 500
- GB-A- 1 571 977
- US-A- 4 278 700
- US-A- 4 415 596

## Description

### BACKGROUND OF THE INVENTION

This invention relates generally to methods for the preparation of soy-containing confectionary type food products. The present method does not require the use of soy materials which have been pretreated in order to reduce or eliminate the off-flavors or odors normally associated with soybeans.

In recent years, soy proteins have become widely used in food products, for the health benefits to be obtained from their use. In some applications, the taste of the soy materials is not objectionable. However, in some uses, such as confectionary products, the flavors found in soy materials may prevent their ready acceptance by the consumer. Thus, in order to extend the uses of soy materials in confectionary products, the present inventors wanted to find a method of preparing confectionary products containing soy wherein the off-flavors and odors normally associated with soy-containing materials are not noticeable. Ideally such a method would not require that the soy-containing material be pretreated to reduce or eliminate the off-flavors and odors normally associated with soybeans.

There are many articles and patents which relate to processing soy materials in order to recover the protein content and which at the same time reduce the flavor compounds to make the proteins more acceptable in food products. However, these previous disclosures were not specifically directed to removal of flavoring compounds and recovering as much of the protein as possible. One example is U.S. Patent 4,420,425 in which protein components of soy are solubilized at a pH of 7 to 11, preferably about 8 and, after ultrafiltration through a membrane having a molecular weight cut off above 70,000, are recovered by spray drying the retained soy proteins. In variants, only a portion of the protein is solubilized at lower pH values and subjected to ultrafiltration with a membrane having a cutoff preferably above 100,000 molecular weight, the product was found to have improved color and flavor. A higher cutoff value would be expected to result in a loss of valuable proteins. In another patent, U.S. Patent 5,658,714, a soy flour slurry is pH-adjusted to the range of 7 to 10 to solubilize proteins, which are then passed through an ultrafiltration membrane and phytate and aluminum are retained, presumably as solids. While the molecular weight cutoff of the membrane was not given, it is assumed that the pore size was large in order to be able to pass the soluble proteins. Both of these patents contain extensive discussions of the efforts of others in the processing of soy materials; neither teaches or suggests the control of pH during the ultrafiltration process.

In a group of related patents, Mead Johnson Company disclosed processes for solubilizing soy proteins by raising the pH of an aqueous solution of soy materials and recovering the proteins which are said to have a bland taste. The processes are principally directed to concentrating proteins rather than removing flavor compounds. In U.S. Patent 3,995,071, the pH was increased to 10.1 to 14 (preferably 11 to 12) to solubilize soy proteins, after which the pH was lowered to about 6 to 10 and ultrafiltration with a membrane having a molecular weight cutoff of 10,000 to 50,000 Daltons was used to retain the proteins while discarding carbohydrates and minerals. In U.S. Patent 4,072,670, emphasis was placed on removing phytates and phytic acid by solubilizing proteins at a pH of 10.6 to 14 and a temperature of 10 to 50°C to make the phytates and phytic acid insoluble, then separating them and finally acidifying the solution to a pH of about 4 to 5 to precipitate the soy proteins. In U.S. Patent 4,091,120 soy proteins were solubilized at a pH less than 10, preferably 7 to 9 and ultrafiltration was used to separate the proteins as retentate, while passing carbohydrates as permeate. These patents do not teach or suggest control of the pH during the ultrafiltration process.

More recently, methods have been provided to obtain deflavored soy materials using ultrafiltration of a basic aqueous solution of the soy-containing material wherein the basic pH is maintained throughout the ultrafiltration or ultrafiltration/diafiltration process. These new process are described in the following copending applications owned by the same assignee as the present invention: United States Patent Application Serial Number 10/655,259, filed September 4, 2003 and entitled "Method of Deflavoring Soy-derived Materials"; United States Patent Application Serial Number 10/665,478, filed September 4, 2003 and entitled "Method of Deflavoring Soy-derived Materials for Use in Beverages"; United States Patent Application Serial Number 10/696,284, filed October 29, 2003 and entitled "Method of Preparation of High Quality Soy Cultured Products"; United States Patent Application Serial Number 10/654,769, filed September 4, 2003 and entitled "Method of Deflavoring Soy-derived Materials for Use in Dough-based and Baked Products"; United States Patent Application Serial Number 10/655,250, filed September 4, 2003 and entitled "Method of Deflavoring Soy-derived Materials Confectionary Type Products"; United States Patent Application Serial Number 10/696,603, filed October 29, 2003, and entitled "Method of Preparation of High Quality Soy-containing Meat and Meat Analog Products"; and United States Patent Application Serial Number 10/696,636, filed October 29, 2003 and entitled "Method of Preparation of High Quality Soy-containing Cheese Products."

Although such deflavored soy materials can be used in many food products, including confectionary type products, the additional step of deflavoring the soy materials increases the cost and complexity of production. It would be desirable, therefore, to provide additional methods whereby confectionary type products containing significant levels of soy protein can be produced which do not posses the off-flavor or odors normally associated with soybeans and which do not require the use of deflavored soy material or pretreatment of the soy materials to provide the desired deflavoring effect. The present invention provides such methods.

### SUMMARY OF THE INVENTION

Broadly, the invention is a process for preparing a soy-containing confectionary product without the off-flavors and odors normally associated with soybeans which does not require the use of deflavored soy material. For purposes of this invention, deflavored soy material is a soy-containing material which has been pretreated to remove the off-flavors and/or odors normally associated with soybeans. In the present process, a composition comprising a soy-containing material (which is not required to be deflavored), sugar, fat, and water is heated to a high temperature for a time sufficient to achieve at least partial carmelization of the sugar and then the partially caramelized composition is cooled to obtain the soy-containing confectionary product.

In one embodiment, the present invention provides a method of producing a soy-containing confectionary product, said method comprising (1) preparing an aqueous composition comprising a soy-containing material and a sugar, (2) heating the aqueous composition at a temperature and for a time sufficient to caramelize at least a portion of the sugar and reduce the moisture content to less than about 30 percent to produce a caramelized composition; and (3) cooling the caramelized composition to form the soy-containing confectionary product, wherein a fat is added to either the aqueous solution in step (1) or to the caramelized composition prior to step (3) in an amount sufficient to provide about 5 to about 20 percent fat in the soy-containing confectionary product and wherein the soy-containing confectionary product contains at least about 5 percent soy protein without off-flavors normally associated with soybeans. The soy-containing material used in the present process does not require a deflavoring pretreatment.

In another embodiment, the present invention provides a soy-containing confectionary product, wherein the soy-containing confectionary product is produced by a method comprising (1) preparing an aqueous composition comprising a soy-containing material and a sugar, (2) heating the aqueous composition at a temperature and for a time sufficient to caramelize at least a portion of the sugar and reduce the moisture content to less than about 30 percent to product a caramelized composition; and (3) cooling the caramelized composition to form the soy-containing confectionary product, wherein a fat is added to either the aqueous solution in step (1) or to the caramelized composition prior to step (3) in an amount sufficient to provide about 5 to about 20 percent fat in the soy-containing confectionary product and wherein the soy-containing confectionary product contains at least about 5 percent soy protein without off-flavors normally associated with soybeans. The soy-containing material used in the present process does not require a deflavoring pretreatment.

### DESCRIPTION OF THE PREFERRED EMBODIMENTS

Soybeans are valuable sources of oil and, in the present invention, of proteins. Soy beans contain about 40 percent proteins, which have been classified after ultracentrifugation as 2S, 7S, 11 S and 15S (see also U.S. Patent 4,420,425). These fractions may contain other materials as well and they have a wide molecular-weight range, from 3,000 to 600,000. It is well known that soy products have undesirable odors and flavors which limit the wide use of such soy materials in food products. These undesirable off-flavors are often characterized as grassy and/or beany flavors. It is believed that lipoxygenases catalyze the oxidation of certain polyunsaturated fatty acids, producing hydroperoxides which are degraded into volatile carbonyl compounds, associated with objectionable odors and flavors in soy-derived materials.

One approach to overcoming the undesirable odors and flavors present in soybeans is a pretreatment step wherein the undesirable odors and flavors are removed or significantly reduced. Such pretreated soy-containing materials generally have a bland flavor and do not impart undesirable odors and flavors to the food product in which they are incorporated. Examples of such deflavoring processes include those described in the following copending applications owned by the same assignee as the present invention: United States Patent Application Serial Number 10/655,259, filed September 4, 2003 and entitled "Method of Deflavoring Soy-derived Materials"; United States Patent Application Serial Number 10/665,478, filed September 4, 2003 and entitled "Method of Deflavoring Soy-derived Materials for Use in Beverages"; United States Patent Application Serial Number 10/696,284, filed October 29, 2003 and entitled "Method of Preparation of High Quality Soy Cultured Products"; United States Patent Application Serial Number 10/654,769, filed September 4, 2003 and entitled "Method of Deflavoring Soy-derived Materials for Use in Dough-based and Baked Products"; United States Patent Application Serial Number 10/655,250, filed September 4, 2003 and entitled "Method of Deflavoring Soy-derived Materials Confectionary Type Products"; United States Patent Application Serial Number 10/696,603, filed October 29, 2003, and entitled "Method of Preparation of High Quality Soy-containing Meat and Meat Analog Products"; and United States Patent Application Serial Number 10/696,636, filed October 29, 2003, and entitled "Method of Preparation of High Quality Soy-containing Cheese Products." Although effective, these deflavoring processes impose additional costs and complexity on the production of food products.

The present invention provides another approach to the incorporation of soy protein in confectionary type food products. An aqueous solution comprising a soy-containing material and a sugar is prepared and then heated under conditions to induce at least partial carmelization of the sugar and reduction of the moisture content of the resulting partially caramelized composition to less than about 30 percent. The resulting composition is then cooled to effect solidification of the composition. A small amount of fat (in an amount sufficient to provide about 5 to about 20 percent fat in the final product) is added to the initial aqueous composition or to the partially caramelized composition prior to cooling. Optional ingredients (e.g., flavors, colorants, and the like) can also be added to the initial aqueous solution (so long as they do not adversely effect the carmelization reactions and/or the effective deflavoring of the soy-containing materials) or to the partially caramelized composition prior to cooling. Although not wishing to be limited by theory, it appears that the presence of the soy-containing material during the carmelization reaction effectively acts to deflavor the soy-containing material by eliminating or significantly reducing the off-flavors and odors normally associated with soybeans.

The process of the invention includes the following steps: (1) formation of an aqueous solution comprising the soy-containing material and sugar; (2) heating the aqueous solution to at least partially caramelize the sugar and to reduce the moisture content to less than about 30 percent, wherein the soy-containing material is effectively deflavored; (3) cooling the resulting composition to form the soy-containing confectionery composition, wherein an effective amount of fat is added to either the aqueous solution prior to the heating step or to the partially caramelized composition prior to the cooling step to provide about 5 to about 20% fat in the soy-containing confectionary composition.

As noted above, the aqueous solution comprising a soy-containing material and a sugar is heated under conditions to induce at least partial carmelization of the sugar and reduction of the moisture content of the resulting partially caramelized composition to less than about 30 percent. As those skilled in the art will understand, partial carmelization is achieved when the proper caramelized color (i.e., golden brown) is obtained. The partially caramelized composition will generally have a thickened viscosity but still remain handleable (i.e., pourable); too much heating will result in burning of the proteins present (indicated by dark color). Generally, such partial carmelization consists of carmelization of about 20 to about 50 percent of the sugar. The reduction of the moisture level of the aqueous solution can also be used to gauge the proper degree of carmelization. Generally the moisture level should be reduced to less than about 50 percent and preferably to about 10 to about 25 percent.

Preferably, the fat is added before carmelization in order to assist in providing a more homogenous distribution of relatively small (typically with an average diameter of about 1 to about 50 microns) fat droplets throughout the product matrix. The fat helps to provide the desired soft and caramel type texture. Preferably, the aqueous solution used to prepare the confectionary product contains about 5 to about 50 percent soy-containing material, about 10 to about 50 percent sweetener, and about 5 to about 15 percent fat. More preferably, this aqueous solution contains about 10 to about 40 percent soy-containing material, about 15 to about 40 percent sweetener, and about 8 to about 10 percent fat. If the fat is added after carmelization, mixing should be sufficient to provide a homogenous distribution of the fat within the product matrix.

Especially preferred confectionary products include candies, nutritional bars, cookies, and the like. The confectionary products of the present invention may also include other desired ingredients including, for example, flavors (e.g., cocoa, vanilla, chocolate, milk, and the like), nutritional additives (e.g., vitamins, minerals, and the like), fruit, colorants, processing aids (e.g., gums, emulsifiers, and the like), edible acids, and the like. Generally, optional ingredients such as flavors, nutritional additives, colorants, processing aids and the like are added to the composition prior to cooling at levels of 0 to about 5 percent.

Generally the confectionery products of this invention contain about 5 to about 50 percent soy protein, and more preferably about 10 to about 40 percent. Especially preferred confectionary products include candy product which may be enrobed with at least one chocolate or caramel layer and nutritional bars comprising a core and at least one chocolate or caramel layer. For purposes of this invention, a "layer" is intended to mean a discrete layer either covering a product or extending through a product or discrete particles or bits within a product. Thus, for example, a layer could include a chocolate layer covering or enrobing the candy or nutritional bar, a discrete chocolate layer through or within the candy or nutritional bar, and/or chocolate particles or bits within the candy or nutritional bar.

Generally the confectionery products of this invention contain about 10 to about 50 percent sweetener, and preferably about 15 to about 40 percent sweeteners. Examples of such sweeteners include natural sugars such as sucrose, fructose, glucose, maltose, high fructose corn syrup, and lactose which are capable of undergoing carmelization reactions. In addition, artificial sweetening agents such as saccharin, aspartame, acesulfame potassium, and sucralose, as well as other sweeteners normally used in food processing, can be used if desired. Such artificial sweetening agents would be used in combination with the natural sugars. Other ingredients normally used in confectionary type products may also be included in the confectionary products of this invention.

Generally the confectionery products of this invention contain about 5 to about 15 percent fat, and more preferably about 8 to about 10 percent. Suitable fats include milk fat, palm, coco, partially and fully hydrogenated fat (e.g., shortening), and the like. The preferred fat is milk fat.

Unless noted otherwise, all percentages are by weight.

**EXAMPLE 1.** This example illustrates the preparation of soy truffles of the following formulation: High fructose corn syrup, 32.1 percent; water, 21.4 percent; sugar, 12.8 percent; salt, 0.6 percent; soy isolate, 24.0 percent; milk fat, 8.5 percent; and vanilla, 0.5 percent. The water, sugar, and corn syrup were throughly mixed to dissolve the sugars. The soy isolate powder was added and completely dispersed using a whisk. Using low to medium heat, the composition was heated with continuous whisking for about 5 minutes at which time the milk fat and salt were added. Heating was continued with whisking until about 50-90 percent of the water was removed by evaporation and partial carmelization (i.e., development of golden brown color) was obtained; the moisture level of the resulting composition was about 5 to about 25 percent. Heat was removed and the vanilla throughly mixed into the composition. The composition was loaded and sheeted on a tray for cooling. The cooled product was refrigerated overnight and then cut into 2.54 cm (1 inch) squares and then enrobed with chocolate at a weight ratio of about 80 to 20 (core to chocolate coating).

Two different chocolate coatings were used. One contained about 20 percent added milk protein and the other about 20 percent added deflavored soy protein. The deflavored soy protein was prepared as described in copending U.S. Patent Application Serial Number 10/655,250, filed September 4, 2003. Truffles prepared with either chocolate coating had excellent flavor and texture with no off-flavors due to the soy materials. The truffles provided a great tasting confectionary product with the benefits of soy.

**Example 2.** This example illustrates the preparation on a pilot plant scale of soy truffles of the following formulation: High fructose com syrup, 28.3 percent; water, 29.1 percent; sugar, 11.3 percent; salt, 0.6 percent; soy isolate, 21.2 percent; milk fat, 7.6 percent; vanilla, 1.6 percent; and flavor mix (banana and pecan), 0.8 percent. A jacketed kettle using pressurized steam for heat and equipped with both a paddle mixer and a scraped surface mixture (to prevent scorching) was used. The water, sugar, and com syrup were throughly mixed with mild heating to dissolve the sugars. The soy isolate powder was then added with continuous mixing. After addition of the milk fat and salt, cooking was continued at about 93.3°C (200°F) for about 30 minutes at which time about 50-90 percent of the water had been removed by evaporation; the moisture level of the resulting composition was about 5 to about 25 percent. Partial carmelization was achieved by heating the composition at about 102.8 to about 104.4°C (217 to about 220°F) for about 10 minutes. Once the desired color was achieved (i.e., golden brown indicating sufficient carmelization), the temperature was reduced to about 48.9°C (120°F) by replacing the steam in the jacketed kettle with chilled water. The cooled composition was then blended with the vanilla and flavor mix, poured on to flat pans, and refrigerated overnight.

The refrigerated composition was then cut into desired shapes (e.g., 1.27 cm (0.5 inch) diameter circles and 2.54 cm (1 inch) squares) and then coated with the same chocolate coatings as in Example 1. All products had excellent appearance, taste (i.e., pleasant caramel flavor with no off flavors), texture (i.e., soft), and mouthfeel (i.e., melted smoothly in the mouth).

**Example 3.** This example illustrates the preparation of high soy protein brownies using the following formulation: High fructose corn syrup, 28.3 percent; water, 29.1 percent; sugar, 11.3 percent; salt, 0.6 percent; soy isolate, 21.2 percent; milk fat, 7.6 percent; vanilla, 1.6 percent; and flavor mix (brownie flavor and cocoa), 5.5 percent. The same procedure as described in Example 2 was used except that, after refrigeration, the sheeted composition was cut into 3.81 cm (1.5 inch) squares and sprinkled with a mixture of powdered sugar and cocoa powder. This product meets the 40:30:30 balance diet claims wherein 40 percent of the calories are from carbohydrates, 30 percent from protein, and 30 percent from fat. Moreover, the product contains about 10 g soy protein per single 70 g brownie, thereby providing sufficient soy protein for the FDA recommendation regarding heart health. The resulting brownies had excellent texture and flavor with no detectable off flavors.

## Claims

1. A soy-containing confectionary product as prepared by a method comprising:
(1) preparing an aqueous composition comprising a soy-containing material and a sugar,
(2) heating the aqueous composition at a temperature and for a time sufficient to caramelize at least a portion of the sugar and reduce the moisture content to less than about 30 percent to produce a caramelized composition; and
(3) cooling the caramelized composition to form the soy-containing confectionary product,
wherein a fat is added to either the aqueous solution in step (1) or to the caramelized composition prior to step (3) in an amount sufficient to provide about 5 to about 20 percent fat in the soy-containing confectionary product and wherein the soy-containing confectionary product contains at least about 5 percent soy protein without off-flavors normally associated with soybeans.

2. The soy-containing confectionary product of Claim 1, wherein the soy-containing material is at least one member of the group consisting of soy milk, soy protein isolate, soy concentrate, and soy flour.

3. The soy-containing confectionary product of Claim 1 or 2, wherein the soy-containing material has not been pretreated to deflavor the soy-containing material.

4. The soy-containing confectionary product of any one of Claims 1 to 3, wherein the confectionary product is a nutritional bar, a candy, or a brownie.

5. The soy-containing confectionary product of any one of Claims 1 to 4, wherein the confectionary product is a nutritional bar or a candy enrobed with a confectionary coating.

6. The soy-containing confectionary product of Claim 5, wherein the confectionary coating is a chocolate coating.

7. A method of preparing a soy-containing confectionary product, said method comprising:
(1) preparing an aqueous composition comprising a soy-containing material and a sugar,
(2) heating the aqueous composition at a temperature and for a time sufficient to caramelize at least a portion of the sugar and reduce the moisture content to less than about 30 percent to produce a caramelized composition; and
(3) cooling the caramelized composition to form the soy-containing confectionary product,
wherein a fat is added to either the aqueous solution in step (1) or to the caramelized composition prior to step (3) in an amount sufficient to provide about 5 to about 20 percent fat in the soy-containing confectionary product and wherein the soy-containing confectionary product contains at least about 5 percent soy protein without off-flavors normally associated with soybeans.

8. The method of Claim 7, wherein the soy-containing material is at least one member of the group consisting of soy milk, soy protein isolate, soy concentrate, and soy flour.

9. The method of Claim 7 or 8, wherein the confectionary product is a nutritional bar, a candy, or a brownie.

10. The method of any one of Claims 7 to 9, wherein the confectionary product is a nutritional bar or a candy enrobed with a confectionary coating.

11. The method of Claim 10, wherein the confectionary coating is a chocolate coating.

12. The method of any one of Claims 7 to 11, wherein the aqueous composition comprises about 10 to about 40 percent soy-containing material, about 15 to about 40 percent sweetener, and about 8 to about 10 percent fat.

13. The method of any one of Claims 7 to 12, wherein the soy-containing material has not been pretreated to deflavor the soy-containing material.

## Patentansprüche

1. Soja enthaltendes Süßwarenprodukt, das durch ein Verfahren hergestellt ist, bei dem man
(1) eine wässrige Zusammensetzung herstellt, die ein Soja enthaltendes Material und Zucker enthält,
(2) die wässrige Zusammensetzung eine Zeitdauer auf eine Temperatur erhitzt, die zur Karamellisierung wenigstens eines Teils des Zuckers und zur Verringerung des Feuchtigkeitsgehalts auf weniger als etwa 30 % ausreichen, um eine karamellisierte Zusammensetzung herzustellen, und
(3) die karamellisierte Zusammensetzung unter Bildung des Soja enthaltenden Süßwarenprodukts abkühlt,
wobei der wässrigen Lösung in Stufe (1) oder der karamellisierten Zusammensetzung vor Stufe (3) Fett in einer ausreichenden Menge zugesetzt wird, um etwa 5 bis etwa 20 % Fett in dem Soja enthaltenden Süßwarenprodukt zu schaffen, und wobei das Soja enthaltende Süßwarenprodukt wenigstens etwa 5 % Sojaprotein ohne den mit Sojabohnen normalerweise verbundenen Beigeschmack enthält.

2. Soja enthaltendes Süßwarenprodukt des Anspruchs 1, bei dem das Soja enthaltende Material wenigstens ein Bestandteil aus der aus Sojamilch, Sojaproteinisolat, Sojakonzentrat und Sojamehl bestehenden Gruppe ist.

3. Soja enthaltendes Süßwarenprodukt des Anspruchs 1 oder 2, bei dem das Soja enthaltende Material nicht zum Geschmacksentzug vorbehandelt wurde.

4. Soja enthaltendes Süßwarenprodukt nach einem der Ansprüche 1 bis 3, bei dem das Süßwarenprodukt ein Nahrungsriegel, eine Süßigkeit oder ein kleiner Schokoladenkuchen ist.

5. Soja enthaltendes Süßwarenprodukt nach einem der Ansprüche 1 bis 4, bei dem das Süßwarenprodukt ein Nahrungsriegel oder eine Süßigkeit ist, die mit einer Süßwarenbeschichtung umhüllt sind.

6. Soja enthaltendes Süßwarenprodukt des Anspruchs 5, bei dem die Süßwarenbeschichtung eine Schokoladenbeschichtung ist.

7. Verfahren der Herstellung eines Soja enthaltenden Süßwarenprodukts, bei dem man
(1) eine wässrige Zusammensetzung herstellt, die ein Soja enthaltendes Material und Zucker enthält,
(2) die wässrige Zusammensetzung eine Zeitdauer auf eine Temperatur erhitzt, die zur Karamellisierung wenigstens eines Teils des Zuckers und zur Verringerung des Feuchtigkeitsgehalts auf weniger als etwa 30 % ausreichen, um eine karamellisierte Zusammensetzung herzustellen, und
(3) die karamellisierte Zusammensetzung unter Bildung des Soja enthaltenden Süßwarenprodukts abkühlt,
wobei der wässrigen Lösung in Stufe (1) oder der karamellisierten Zusammensetzung vor Stufe (3) Fett in einer ausreichenden Menge zugesetzt wird, um etwa 5 bis etwa 20 % Fett in dem Soja enthaltenden Süßwarenprodukt zu schaffen, und wobei das Soja enthaltende Süßwarenprodukt wenigstens etwa 5 % Sojaprotein ohne den mit Sojabohnen normalerweise verbundenen Beigeschmack enthält.

8. Verfahren des Anspruchs 7, bei dem das Soja enthaltende Material wenigstens ein Bestandteil aus der aus Sojamilch, Sojaproteinisolat, Sojakonzentrat und Sojamehl bestehenden Gruppe ist.

9. Verfahren des Anspruchs 7 oder 8, bei dem das Süßwarenprodukt ein Nahrungsriegel, eine Süßigkeit oder ein kleiner Schokoladenkuchen ist.

10. Verfahren eines der Ansprüche 7 bis 9, bei dem das Süßwarenprodukt ein Nahrungsriegel oder eine Süßigkeit ist, die mit einer Süßwarenbeschichtung umhüllt sind.

11. Verfahren des Anspruchs 10, bei dem die Süßwarenbeschichtung eine Schokoladenbeschichtung ist.

12. Verfahren eines der Ansprüche 7 bis 11, bei dem die wässrige Zusammensetzung etwa 10 bis etwa 40 % Soja enthaltendes Material, etwa 15 bis etwa 40 % Süßungsmittel und etwa 8 bis etwa 10 % Fett enthält.

13. Verfahren eines der Ansprüche 7 bis 12, bei dem das Soja enthaltende Material nicht zum Geschmacksentzug vorbehandelt wurde.

## Revendications

1. Produit de confiserie contenant du soja, préparé par un procédé comprenant :
(1) la préparation d'une composition aqueuse comprenant un matériau contenant du soja et un sucre,
(2) le chauffage de la composition aqueuse à une température et pendant une durée suffisantes pour caraméliser au moins une partie du sucre et réduire la teneur en humidité à moins d'environ 30 % pour produire une composition caramélisée ; et
(3) le refroidissement de la composition caramélisée pour former le produit de confiserie contenant du soja,
dans lequel une matière grasse est ajoutée à la solution aqueuse de l'étape (1) ou à la composition caramélisée avant l'étape (3) en une quantité suffisante pour obtenir environ 5 à environ 20 % de matière grasse dans le produit de confiserie contenant du soja et dans lequel le produit de confiserie contenant du soja contient au moins environ 5 % de protéine de soja ne présentant pas le goût atypique habituellement associé au soja.

2. Produit de confiserie contenant du soja selon la revendication 1, dans lequel le matériau contenant du soja est au moins l'un des éléments du groupe constitué du lait de soja, d'un isolat de protéine de soja, d'un concentré de soja et de la farine de soja.

3. Produit de confiserie contenant du soja selon la revendication 1 ou 2, dans lequel le matériau contenant du soja n'a pas été prétraité pour éliminer le goût du matériau contenant du soja.

4. Produit de confiserie contenant du soja selon l'une quelconque des revendications 1 à 3, dans lequel le produit de confiserie est une barre alimentaire, un bonbon ou un brownie.

5. Produit de confiserie contenant du soja selon l'une quelconque des revendications 1 à 4, dans lequel le produit de confiserie est une barre alimentaire ou un bonbon enrobé d'un revêtement de confiserie.

6. Produit de confiserie contenant du soja selon la revendication 5, dans lequel le revêtement de confiserie est un revêtement de chocolat.

7. Procédé de préparation d'un produit de confiserie contenant du soja, ledit procédé comprenant:
(1) la préparation d'une composition aqueuse comprenant un matériau contenant du soja et un sucre,
(2) le chauffage de la composition aqueuse à une température et pendant une durée suffisantes pour caraméliser au moins une partie du sucre et réduire la teneur en humidité à moins d'environ 30 % pour produire une composition caramélisée ; et
(3) le refroidissement de la composition caramélisée pour former le produit de confiserie contenant du soja,
dans lequel une matière grasse est ajoutée à la solution aqueuse de l'étape (1) ou à la composition caramélisée avant l'étape (3) en une quantité suffisante pour obtenir environ 5 à environ 20 % de matière grasse dans le produit de confiserie contenant du soja et dans lequel le produit de confiserie contenant du soja contient au moins environ 5 % de protéine de soja ne présentant pas le goût atypique habituellement associé au soja.

8. Procédé selon la revendication 7, dans lequel le matériau contenant du soja est au moins l'un des éléments du groupe constitué du lait de soja, d'un isolat de protéine de soja, d'un concentré de soja et de la farine de soja.

9. Procédé selon la revendication 7 ou 8, dans lequel le produit de confiserie est une barre alimentaire, un bonbon ou un brownie.

10. Procédé selon l'une quelconque des revendications 7 à 9, dans lequel le produit de confiserie est une barre alimentaire ou un bonbon enrobé d'un revêtement de confiserie.

11. Procédé selon la revendication 10, dans lequel le revêtement de confiserie est un revêtement de chocolat.

12. Procédé selon l'une quelconque des revendications 7 à 11, dans lequel la composition aqueuse comprend environ 10 à environ 40 % de matériau contenant du soja, environ 15 à environ 40 % d'édulcorant et environ 8 à environ 10 % de matières grasses.

13. Procédé selon l'une quelconque des revendications 7 à 12, dans lequel le matériau contenant du soja n'a pas été prétraité pour éliminer le goût du matériau contenant du soja.
